# EUROPÄISCHE PATENTSCHRIFT

(11) **EP 1 676 099 B1**
(45) Veröffentlichungstag und Bekanntmachung des Hinweises auf die Patenterteilung: **05.05.2010**
(21) Anmeldenummer: 04790762.1
(22) Anmeldetag: 22.10.2004
(51) Int. Cl.: G01D 5/14

(54) **GEBEREINRICHTUNG MIT EINEM WINKELSENSOR**
SENSOR DEVICE WITH AN ANGLE SENSOR
DISPOSITIF DETECTEUR COMPRENANT UN CAPTEUR ANGULAIRE

(30) Priorität: 22.10.2003 DE 10349556
(43) Veröffentlichungstag der Anmeldung: 05.07.2006
(73) Patentinhaber: Micronas GmbH, 79108 Freiburg i. Br. (DE)
(72) Erfinder: HEBERLE, Klaus, 79276 Reute (DE); BIDENBACH, Reiner, 79279 Vörstetten (DE)
(74) Vertreter: Göhring, Robert
(86) Internationale Anmeldenummer: PCT/EP2004/011969
(87) Internationale Veröffentlichungsnummer: WO 2005/040728

(56) Entgegenhaltungen:
- EP-A- 0 893 668
- EP-A- 1 503 182
- US-A1- 2001 033 160

## Beschreibung

Die Erfindung betrifft eine Gebereinrichtung mit einem Winkelsensor für eine mechanische Anordnung aus zwei gegeneinander drehbaren Teilen, nämlich einem ersten und einem demgegenüber drehbaren zweiten Teil. Derartige Einrichtungen dienen an vielen Stellen der Mechanik der elektronischen Überwachung von Winkelzuständen oder Drehzahlen. Wenn eine hohe Winkelauflösung gefordert ist, wird dies in der Regel über ein zahnradförmiges Geberrad und mindestens einem Magnetsensor erreicht, der das von den zahnförmigen Ausbildungen des Geberrades modulierte Magnetfeld über eine geeignete Messanordnung erfasst. Diese kann aus einem oder mehreren versetzt angeordneten Hall- oder magnetoresistiven Elementen bestehen.

Eine andere, weniger aufwendige Anordnung zur Winkelbestimmung ergibt sich aus einer axialen Anordnung von Magnetfeld und Sensor. Hier ist nur noch ein einziger Magnet vorhanden, dessen vom Nord- zum Südpol laufenden Magnetlinien bei der Drehung gegenüber der axial gelegenen Messeinrichtung gleichsam ein umlaufendes Magnetfeld bilden. Wegen den elektrischen Zuleitungen ist die Messeinrichtung dabei zweckmäßigerweise mit dem räumlich festen Teil verbunden und der Magnet mit der Rotationsachse, aber das schließt die umgekehrte Anordnung nicht grundsätzlich aus. Aus dem umlaufenden Magnetfeld bestimmt die Messeinrichtung die Sinus- und Kosinuskomponente und bildet daraus über ihre Tangensbeziehung die gesuchte Winkelinformation. Ob die Auswertung dabei über Tabellen oder Zwischenrechnungen oder in gemischter Form erfolgt ist für das Messprinzip nicht von Bedeutung. In der Regel findet mindestens vor dem Tabellengang noch eine Normierung der Messwerte statt, damit selbst bei einer relativ groben Auflösung die Tabelle nicht zu umfangreich wird. Durch die Vorzeichenbetrachtung lassen sich auf diese Weise alle vier Quadranten abdecken.

Bei der axialen Anordnung liegen die Magnetlinien im Bereich der Messeinrichtung etwa in einer Ebene senkrecht zur Rotationsachse. Das von den Magnetlinien zu durchdringende magnetoresistive Element oder das Hall-Element ist daher vertikal in Richtung der Rotationsachse ausgerichtet. Zur Erfassung der Sinus- und Kosinuskomponente des Magnetfeldes sind entweder zwei unterschiedlich ausgerichtete Messsensoren vorhanden oder ein Sensor, dessen Messrichtung in der Rotationsebene um 90° umschaltbar ist. Ein monolithisch integrierter Hall-Sensor, der als vertikaler Hall-Sensor bezüglich der vorgegebenen Halbleiteroberfläche arbeitet, ist beispielsweise in der eigenen deutschen Patentanmeldung mit dem Aktenzeichen 10313642.8 DE (intern: C-1926) beschrieben. Andere Messsensoren lenken das Magnetfeld mittels geeigneter magnetische Leitmittel und Konzentratoren so um, dass das Messelement parallel zur Rotationsebene bleiben kann. Mehrere derartige Messelemente und zugehörige magnetische Leitmittel und Konzentratoren lassen sich zu einer Feldanordnung zusammenführen, mit der gleichzeitig die Sinus- und Kosinuskomponente gemessen werden kann.

Ein wesentlicher Nachteil bei den beschriebenen Verfahren ist, dass der auflösbare Drehwinkelbereich insgesamt nur 360° umfasst und die darüber und darunter liegenden Winkelbereiche wegen der Mehrdeutigkeit nicht mehr erkannt werden können. Abhilfe ist mit Getriebeuntersetzungen möglich, die aber mechanisch aufwendig sind und zusätzliche Messeinrichtungen erfordern, wenn die Auflösung nicht in gleichem Maße reduziert werden kann.

Aufgabe der Erfindung ist es, eine auf magnetischer Basis wirksame Gebereinrichtung anzugeben, die auf einfache Weise die Mehrdeutigkeit in der Winkelbestimmung verhindert.

In EP 0 893 668 A1 ist ein Winkelsensor zur Bestimmung eines axialen Drehwinkels mit Magnetsensoren beschrieben. Der Drehwinkelsensor erfasst dabei eine Sinuskomponente eines rotierenden Magnetfeldes, dessen Richtung in der Rotationsebene liegt. Wegen der Ankopplung des Magnetsensors, an die Sinuskomponente des rotierenden Magnetzeigers ist der auflösbare Winkelbereich auf 180° beschränkt und wiederholt sich dann periodisch. Um trotzdem Winkelpositionen bis 360° eindeutig auswerten zu können, wird durch mindestens einen seitlich angeordneten weiteren Magnetsensor, der eine vom rotierenden Magnet ausgehende vertikale Magnetfeldkomponente erfasst, ein Richtungskomponente bestimmt, mit der eine eindeutige Zuordnung der 180°-Meßwerte zu einem absoluten Winkelwert bis 360° ermöglicht wird.

Dies erfolgt entsprechend den Merkmalen des Anspruchs 1 dadurch, dass eine axiale Anordnung dahingehend weitergebildet wird, dass über die Rotation nicht nur die Sinus- und Kosinuskomponente des Magnetfeldes beeinflusst wird, sondern auch noch der Betrag des Magnetfeldes, der in Abhängigkeit vom Drehwinkel verändert wird, wodurch Mehrdeutigkeiten bei der Auswertung ausschließbar sind.

Die Erfinder haben erkannt, dass bei vielen Anwendungen nur wenige Umdrehungen sicher ohne Mehrdeutigkeiten erfasst werden müssen, weil Bereiche von mehr als 3-4 Umdrehungen in diesen Fällen gar nicht auftreten. Eine derartige Anwendung ergibt sich beispielsweise bei der Erfassung des Lenkradeinschlages für Navigationszwecke oder bei Steuereingriffen zur Verhinderung von Ausbrechverhalten oder Schleudern und dergleichen mehr.

Die Erfindung und vorteilhafte Weiterbildungen werden nun anhand der Figuren der Zeichnung näher erläutert.
Fig. 1 zeigt schematisch in seitlicher Ansicht ein einfaches Ausführungsbeispiel der Gebereinrichtung mit den wesentlichen Teilen für die Erfindung,
Fig. 2 zeigt schematisch in Richtung der Rotationsachse ein einfaches Ausführungsbeispiel für die Magneteinrichtung mit zugehörigem Magnetfeld in der Rotationsebene,
Fig. 3 zeigt im Zeigerdiagramm die Sinus- und Kosinuskomponente eines momentan vorhandenen Magnetfeldes,
Fig. 4 zeigt im Zeigerdiagramm das rotierende Magnetfeld, wobei die Zeigerlänge vom absoluten Drehwinkel abhängig ist.
Fig. 5 zeigt die Mehrdeutigkeit der Winkelbestimmung über die trigonometrischen Beziehungen, wenn der Drehwinkel über 360 Grad ist, die Winkelbestimmung jedoch nur vier Quadranten auflösen kann und
Fig. 6 zeigt schematisch die Verknüpfung des sich mit dem absoluten Drehwinkel ändernden Betrags der Magnetfeldstärke mit dem relativen Drehwinkel zur Auflösung der Mehrdeutigkeit.

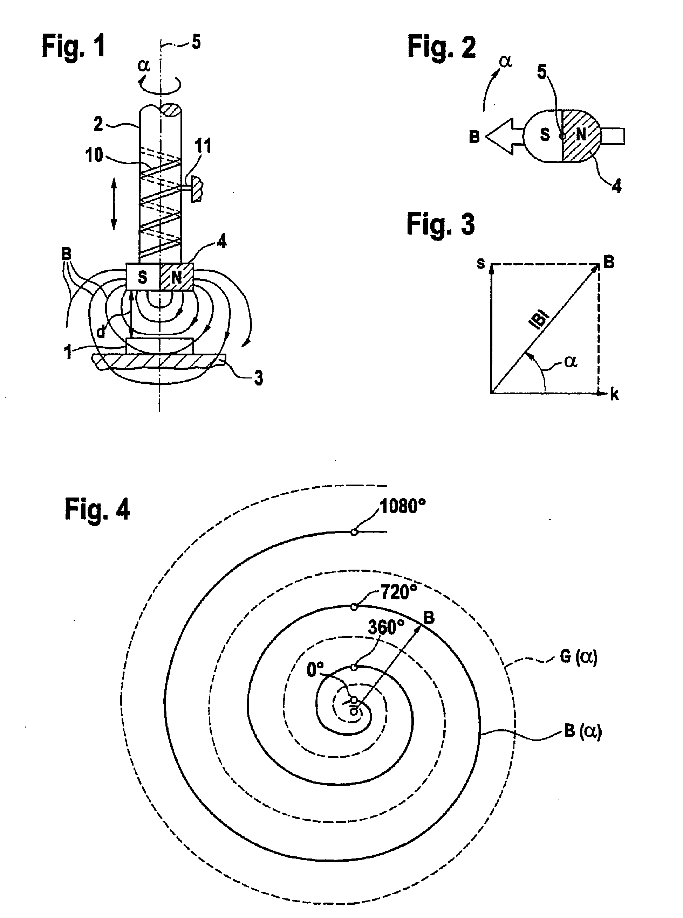

Fig. 1 zeigt schematisch in seitlicher Sicht ein Ausführungsbeispiel der Gebereinrichtung. Diese besteht aus zwei gegeneinander drehbaren Teilen, deren Rotationsachse 5 durch eine strichpunktierte Linie dargestellt ist. Welcher Teil sich dabei dreht oder feststeht, spielt für die Winkelerfassung keine Rolle, weil es lediglich auf die Relativdrehung ankommt. Im Ausführungsbeispiel von Fig. 1 ist das erste Teil 2 mit der Rotationsachse 5 verkoppelt und das zweite Teil 3 feststehend. Das erste Teil 2 trägt dabei eine Magneteinrichtung 4 zur Erzeugung eines rotierenden Magnetfeldes B. Benachbart zu dieser Magneteinrichtung 4 befindet sich auf dem zweiten Teil 3 ein Winkelsensor 1. Das von der Magneteinrichtung 4 erzeugte Magnetfeld B, das vom Nord- zum Südpol N bzw. S verläuft und etwa zur Rotationsebene parallel ist, wird vom Winkelsensor 1 erfasst. Damit sich das Magnetfeld B während der Rotation α, nicht nur in der Richtung sondern auch noch in der Stärke, im folgenden Text meist als Betrag bezeichnet, ändert, ist der erste Teil 2 mit einer schraubenförmigen Nut 10 versehen, in die ein feststehender Führungsstift 11 eingreift. Bei der Rotation bewegt sich nun das erste Teil 2 nach oben oder unten, so dass der Abstand d zwischen der Magneteinrichtung 4 und dem Winkelsensor 1 verändert wird. Selbstverständlich können die nutförmige Steuerkurve 10 und der Führungsstift 11 mechanisch auch invers als eine erhabene Steuerkurve mit einem nutförmigen Führungsteil ausgebildet sein. Besonders zweckmäßig kann es sein, die Steuerkurve 10 und die ganze magnetische Anordnung so auszubilden, das der Betrag des Magnetfeldes B am Messort einen gewünschten Verlauf, insbesondere einen linearen Verlauf, in Abhängigkeit vom Abstand d aufweist.

In Fig. 2 ist schematisch als Magneteinrichtung 4 ein einfacher Magnet mit Nord- und Südpol N, S dargestellt, der bei Rotation α in der Messebene das umlaufende Magnetfeld B erzeugt, dass von dem nicht dargestellten Winkelsensor 1 (vgl. Fig. 1) erfasst wird.

Fig. 3 zeigt in der Darstellung eines Zeigerdiagramms die Zerlegung eines momentanen Magnetfeldvektors B in seine Sinus- und Kosinuskomponente s bzw. k. Die unterschiedliche Zeigerlänge wird durch den Betrag |B| der Feldstärke B erfasst. Aus der Sinus- und Kosinuskomponente s, k lässt sich über die trigonometrische Beziehungen und gespeicherte Tabellenwerten der zugehörige Drehwinkel α bestimmen. Dies kann in der Messeinrichtung 1mittels eines mitintegrierten Prozessors erfolgen oder in externen Prozessoren, die an die Gebereinrichtung angeschlossen sind. Die Winkelbestimmimg kann selbstverständlich auch nach dem "Cordic-Verfahren" erfolgen, das aus der Sinus- und Kosinuskomponente s, k mittels eines iterativen Näherungsverfahrens den zugehörigen Winkel α und den Betrag bestimmt. Bei diesem bekannten Verfahren sind keine aufwendigen Multiplikationen oder Divisionen erforderlich.

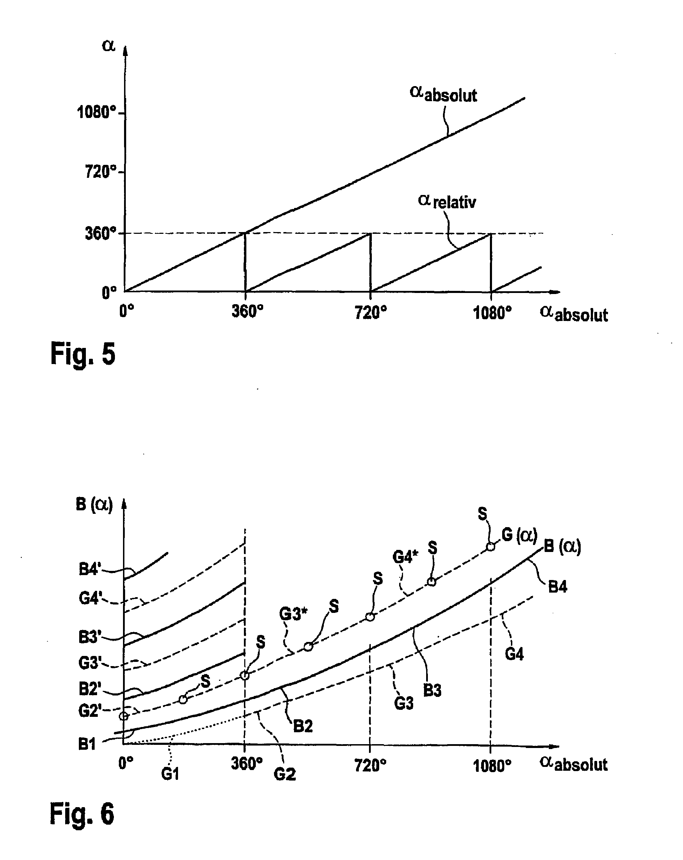

In Fig. 4 wird ebenfalls im Zeigerdiagramm der Verlauf des Magnetfeldes B(α) als Funktion des Drehwinkels α dargestellt, wobei der Drehwinkel α den Bereich von etwa 0 Grad bis 1080 Grad überstreicht. Der Betrag des als umlaufenden Zeiger dargestellten Magnetfeldes B nimmt dabei kontinuierlich zu, was nach Fig. 1 einer kontinuierlichen Abnahme des Abstandes d zwischen der Magneteinrichtung 4 und dem Winkelsensor 1 entspricht. Eine gestrichelt dargestellte Spirallinie zeigt den Verlauf einer Grenzlinie G(α), die auch die Toleranzbereiche für den Betragsverlauf B(α) vorgibt. Wenn die Streuungen der Betragslinie B(α) nicht zu groß sind, dann liegen die einzelnen Messwerte genügend weit von der Grenzlinie G(α) entfernt, so dass die Grenzlinie auch vereinfacht werden kann. In diesem Fall genügen beispielsweise nur einige Stützstellen (vgl. auch Fig. 6) und die Zwischenwerte können linear interpoliert werden oder man verwendet gar eine treppenförmige Näherung. Vereinfachungen der Grenzkurve G(α) sind wichtig, weil diese Werte separat in dem Winkelsensor 1 oder in dem angeschlossenen Prozessor gespeichert werden müssen.

Fig. 5 zeigt schematisch den Unterschied zwischen einer relativen Winkelerfassung α relativ, die modular nur den Winkelbereich zwischen 0° und 360° unterscheidet und einer absoluten Winkelerfassung α absolut. Im dargestellten Ausführungsbeispiel erfasst der absolute Drehwinkel den Winkelbereich von etwa von 0° bis 1080°. Wie bereits erwähnt, ermöglichen die trigonometrischen Formeln nur eine Anwendung auf die vier Quadranten, dann beginnen die Winkelwerte wieder bei 0 Grad, dies gilt auch für das bereits erwähnte Cordic-Verfahren. Daher liefert die Auswertung der Sinus- und Kosinuskomponente s, k ohne Berücksichtigung der absichtlichen Betragsänderung nur Winkelwerte, die zwischen 0°und 360° liegen, die daher als relative Drehwinkel α relativ bezeichnet sind.

Fig. 6 zeigt in der vertikalen Achse den Betrag des Magnetfeldverlaufs B(α) für den Drehwinkel α _{absolut} von 0° bis 1080°, der im gleichen Maßstab wie in Fig. 5 als Parameter auf der horizontalen Achse dient. Der Verlauf ist leicht nichtlinear und entspricht in seinem Betrag etwa dem Magnetfeldverlauf B(α) von Fig. 4. Zur Unterscheidung ist der Magnetfeldverlauf B(α) in einzelne Bereiche B1 bis B4 unterteilt, die folgenden Winkelbereichen zugeordnet sind: 0°-360°, 360°-720°, 720°-1080° und der über 1080° liegende Bereich. Im Winkelbereich 0° bis 360° sind diese Bereiche B2, B3, B4 als Bereiche B2', B3', B4' an entsprechender Position eingetragen.

Die aus Fig. 4 bekannte Grenzkurve G(α) ist in Fig. 6 ebenfalls als gestrichelte Linie unterhalb des Magnetfeldverlaufes B(α) eingezeichnet. Sie ist wie der Magnetfeldverlauf B(α) in die Abschnitte G1, G2, G3, G4 unterteilt, die an entsprechender Stelle G2', G3', G4' im Winkelbereich 0°-360° eingefügt sind. Der Abschnitt G1 nimmt dabei eine Sonderrolle ein, weil er auch durchgehend den Wert 0 haben könnte. Da entsprechend Fig. 4 die Grenzkurve G(α) für den Magnetfeldverlauf B(α) nach beiden Seiten den Toleranzbereich definiert, sind die Abschnitte G3 und G4 oberhalb des Magnetfeldverlaufs um 360 Grad nach links versetzt als Bereiche G3* und G4* eingezeichnet.

Die Grenzkurve G(α) in Fig. 6 enthält ferner noch einige zu speichernde Stützwerte S, um nicht die gesamte Grenzkurve speichern zu müssen. Die Zwischenwerte der einzelnen Bereiche G1, G2, G3 und G4 können dann unter Kenntnis des relativen Drehwinkels αᵣₑₗₐₜᵢᵥ näherungsweise über eine Interpolation ermittelt werden. Noch einfacher ist die Speicherung der Grenzkurve über Stützwerte S, wenn die Stützwerte etwas dichter liegen und die Grenzkurve G(α) durch eine treppenförmige Näherung ersetzt werden kann. In diesem Fall erübrigt sich die Interpolation.

Die Auswertung lässt sich ebenfalls anhand von Fig. 6 leicht darstellen. Zunächst wird der relative Drehwinkel α relativ bestimmt. Falls der Betrag des Magnetfeldes B noch nicht vorliegt, wird dieses in einem nächsten Schritt bestimmt. Durch Vergleich des Betrages B mit den vorgegebenen Schwellen G1, G2', G3', G4' wird ermittelt, in welchem Toleranzbereich der Betrag B liegt. Aus dem jeweiligen Toleranzbereich bestimmt sich dann der zugehörige absolute Winkelbereich und damit der absolute Drehwinkel α absolut. Dieser ist die Summe aus der Anzahl von vollen 360°-Umläufen und dem jeweiligen relativen Drehwinkel α relativ.

## Patentansprüche

1. Gebereinrichtung mit einem Winkelsensor (1) für eine Anordnung aus zwei gegeneinander drehbaren Teilen, nämlich einem ersten (2) und einem zweiten Teil (3), wobei die Drehung durch eine Rotationsachse (5) definiert ist,
der mit dem zweite Teil (3) verbundene Winkelsensor (1) erfasst eine von einem Drehwinkel (α) abhängige Sinus- und Kosinuskomponente (s, k) eines Magnetfeldes (B), das von einer mit dem ersten Teil (2) verbundenen Magneteinrichtung (4) erzeugt wird,
zusätzlich zu einem relativen Drehwinkel (αᵣₑₗₐₜᵢᵥ), mit dem nur ein begrenzter Winkelbereich von 360° erfassbar ist, erfasst der Winkelsensor (1) oder ein anderer Magnetfeldsensor als eine weitere Komponente den Betrag des Magnetfeldes (B) und
der Betrag des Magnetfeldes (3) ändert sich in Abhängigkeit von einem absoluten Drehwinkel (α_{absolut}), wobei die Änderung so groß ist, dass bei Winkeln über 360° Mehrdeutigkeiten in der Winkelangabe durch eine Verknüpfung des relativen Drehwinkels (αᵣₑₗₐₜᵢᵥ) mit dem Betrag des Magnetfeldes (B) ausgeschlossen sind, wodurch der absolute Drehwinkel (α_{absolut}) bestimmbar ist..

2. Gebereinrichtung nach Anspruch 1, **dadurch gekennzeichnet, dass** der Betrag des Magnetfeldes (B) von einer vom absoluten Drehwinkel (α_{absolut}) gesteuerten Abstandsänderung (d) in Richtung der Rotationsachse (5) zwischen der Magneteinrichtung (4) und dem Winkelsensor (1) abhängig ist.

3. Gebereinrichtung nach Anspruch 2, **dadurch gekennzeichnet, dass** die Abstandsänderung (d) durch eine nutförmige Steuerkurve (10) und einen darin eingreifenden Führungsstift (11) erfolgt oder durch eine entsprechende inverse Ausgestaltung als erhabene Steuerkurve mit einem nutförmigen Führungsteil.

4. Gebereinrichtung nach Anspruch 3, **dadurch gekennzeichnet dass** die Steuerkurve (10) bezüglich der Rotationsachse (5) schraubenförmig ausgebildet ist.

5. Gebereinrichtung nach einem der Ansprüche 1 bis 4,
**dadurch gekennzeichnet, dass** im Winkelsensor (1) oder einer an den Winkelsensor extern angeschlossenen Auswerteeinrichtung aus der Sinus- und Kosinuskomponente (s, k) ein resultierender Zeiger und dessen Betrag bestimmt sind.

6. Gebereinrichtung nach einem der Ansprüche 1 bis 5,
**dadurch gekennzeichnet, dass** jedem relativen Drehwinkel (αᵣₑₗₐₜᵢᵥ) ein Toleranzbereich für den Betrag in einer Speichereinrichtung zugeordnet ist und mittels eines Fensterkomparators die Entscheidung erfolgt, welchem absoluten Drehwinkelbereich (α_{absolut}) der relative Drehwinkel (αᵣₑₗₐₜᵢᵥ) zugeordnet ist.

7. Gebereinrichtung nach Anspruch 6,
**dadurch gekennzeichnet, dass** die Grenzen für die Toleranzbereiche des Betrages des Magnetfeldes (B) in einem vorausgehenden Programmiermodus bestimmt sind, wobei die Grenzen aus gespeicherten Stützwerten (S) und dazu interpolierten Zwischenwerten bestehen.

8. Gebereinrichtung nach einem der Ansprüche 1 bis 7,
**dadurch gekennzeichnet, dass** der absolute Drehwinkel (α_{absolut}) als analoger Wert, beispielsweise ein zwischen zwei Grenzwerten liegender Spannungs- oder Stromwert oder ein zwischen zwei Grenzwerten liegendes pulsweitenmoduliertes Signal, von der Gebereinrichtung abgebbar ist.

9. Gebereinrichtung nach einem der Ansprüche 1 bis 7,
**dadurch gekennzeichnet, dass** der absolute Drehwinkel (α_{absolut}) als digitaler Wert, beispielsweise ein durch unterscheidbare Logikzustände definiertes Datenwort, von der Gebereinrichtung ausgangsseitig abgebbar ist.

## Claims

1. Sensor device comprising an angle sensor (1) for an arrangement composed of two parts which can rotate relative to one another, namely a first part (2) and a second part (3), wherein the rotation is defined by a rotation axis (5),
the angle sensor (1) connected to the second part (3) detects a sine and cosine component (s, k), dependent on a rotation angle (α), of a magnetic field (B) which is generated by a magnet device (4) connected to the first part (2),
in addition to a relative rotation angle (αᵣₑₗₐₜᵢᵥₑ), with which only a limited angle range of 360° can be detected, the angle sensor (1) or another magnetic field sensor detects the magnitude of the magnetic field (B) as a further component and
the magnitude of the magnetic field (B) changes as a function of an absolute rotation angle (α_{absolute}), wherein the change is so great that, in the case of angles greater than 360°, ambiguities in the angle indication are ruled out by linking the relative rotation angle (αᵣₑₗₐₜᵢᵥₑ) with the magnitude of the magnetic field (B), as a result of which the absolute rotation angle (α_{absolute}) can be determined.

2. Sensor device according to claim 1, **characterised in that** the magnitude of the magnetic field (B) is dependent on a change in distance (d), controlled by the absolute rotation angle (α_{absolute}), between the magnet device (4) and the angle sensor (1) in the direction of the rotation axis (5).

3. Sensor device according to claim 2, **characterised in that** the change in distance (d) takes place by means of a groove-shaped control curve (10) and a guide pin (11) engaging therein, or by means of a corresponding inverse configuration as a raised control curve with a groove-shaped guide part.

4. Sensor device according to claim 3, **characterised in that** the control curve (10) is helical in relation to the rotation axis (5).

5. Sensor device according to one of claims 1 to 4, **characterised in that** a resulting indicator and the magnitude thereof are determined from the sine and cosine components (s, k) in the angle sensor (1) or in an evaluation device connected externally to the angle sensor.

6. Sensor device according to one of claims 1 to 5, **characterised in that** each relative rotation angle (αᵣₑₗₐₜᵢᵥₑ) is assigned a tolerance range for the magnitude in a memory device and a window comparator is used to decide the absolute rotation angle range (α_{absolute}) to which the relative rotation angle (αᵣₑₗₐₜᵢᵥₑ) is assigned.

7. Sensor device according to claim 6, **characterised in that** the limits for the tolerance ranges of the magnitude of the magnetic field (B) are determined in a preceding programming mode, wherein the limits consist of stored supporting values (S) and intermediate values interpolated therefrom.

8. Sensor device according to one of claims 1 to 7, **characterised in that** the absolute rotation angle (α_{absolute}) can be output by the sensor device as an analogue value, for example a voltage or current value lying between two limit values or a pulse-width-modulated signal lying between two limit values.

9. Sensor device according to one of claims 1 to 7, **characterised in that** the absolute rotation angle (α_{absolute}) can be output by the sensor device on the output side as a digital value, for example a data word defined by distinguishable logic states.

## Revendications

1. Installation de détecteur comportant un capteur angulaire (1) pour un dispositif formé de deux parties tournant l'une par rapport à l'autre à savoir, une première partie (2) et une seconde partie (3), la rotation étant définie par un axe de rotation (5),
- le capteur angulaire (1) relié à la seconde partie (3) saisissant une composante sinus et une composante cosinus (s, k) dépendant de l'angle de rotation (α) d'un champ magnétique (B) généré par une installation magnétique (4) reliée à la première partie (2),
- en plus d'un angle de rotation relatif (α_{relatif}) qui ne saisit qu'une plage angulaire limitée à 360°, le capteur angulaire (1) ou un autre capteur de champ magnétique saisit comme autre composante, l'amplitude du champ magnétique (B), et
- l'amplitude du champ magnétique (3) varie en fonction d'un angle de rotation absolu (α_{absolu}), la variation étant suffisamment grande de sorte que pour des angles supérieurs à 360°, on exclut la signification ambivalente de l'indication angulaire par une combinaison de l'angle de rotation relatif (α_{relatif}) et de l'amplitude du champ magnétique (B), ce qui permet de déterminer l'angle de rotation absolu (α_{absolu}).

2. Installation de détecteur selon la revendication 1,
**caractérisée en ce que**
l'amplitude du champ magnétique (B) dépend d'une variation de distance (d), commandée à partir de l'angle de rotation absolu (α_{absolu}) en direction de l'axe de rotation (5), entre l'installation magnétique (4) et le capteur angulaire (1).

3. Installation de détecteur selon la revendication 2,
**caractérisée en ce que**
la variation de distance (d) résulte d'une courbe de commande (10) en forme de rainure et d'une broche de guidage (11) pénétrant dans cette courbe ou d'une réalisation inverse correspondante sous la forme d'une courbe de commande en relief avec une pièce de guidage en forme de rainure.

4. Installation selon la revendication 3,
**caractérisée en ce que**
la courbe de commande (10) est en forme de spirale par rapport à l'axe de rotation (5).

5. Installation selon l'une des revendications 1 à 4,
**caractérisée en ce qu'**
une installation d'exploitation du capteur angulaire (1) ou raccordée de manière externe au capteur externe angulaire détermine un index résultant ainsi que son amplitude à partir des composantes sinus et cosinus (s, k).

6. Installation selon l'une des revendications 1 à 5,
**caractérisée en ce qu'**
une plage de tolérance pour l'amplitude est associée dans l'installation de mémoire à chaque angle de rotation relatif (α_{relatif}), et à l'aide d'un comparateur à fenêtre, on décide quelle plage angulaire de rotation, absolue (α_{absolue}) est associée à l'angle de rotation relatif (α_{relatif}).

7. Installation selon la revendication 6,
**caractérisée en ce que**
les limites des plages de tolérance de l'amplitude du champ magnétique (B), se déterminent dans un mode programmé, en amont, les limites se composant de valeurs d'appui (S), mémorisées et de valeurs intermédiaires interpolées.

8. Installation selon l'une des revendications 1 à 7,
**caractérisée en ce que**
l'angle de rotation absolu (α_{absolu}), est une valeur analogique par exemple une valeur de tension ou d'intensité située entre deux valeurs limites ou un signal à modulation de largeur d'impulsion situé entre deux limites, et qui est fourni par l'installation de détecteur.

9. Installation selon l'une des revendications 1 à 7,
**caractérisée en ce que**
l'angle de rotation absolu (α_{absolu}), est une valeur numérique par exemple un mot de données défini par des états logiques distinctifs, fournis en sortie par l'installation de détecteur.
